# EUROPEAN PATENT APPLICATION

(11) **EP 0 981 232 A2**
(43) Date of publication of application: **23.02.2000**
(21) Application number: 99115329.7
(22) Date of filing: 03.08.1999
(51) Int. Cl.: H04L 29/06, G06F 17/30, H04Q 7/38

(54) **Mobile communication method**

(30) Priority: 20.08.1998 JP 23384098
(71) Applicant: Hitachi, Ltd., Chiyoda-ku, Tokyo 101-8010 (JP)
(72) Inventor: Takahashi, Yasuhiro, Sagamihara-shi, Kanagawa-ken 228-0805 (JP); Matsui, Susumu, Machida-shi, Tokyo 194-0002 (JP); Kondou, Takeshi, Fujisawa-shi, Kanagawa-ken 251-0047 (JP); Ichikawa, Kazuyuki, Ebina-shi, Kanagawa-ken 243-0431 (JP)
(74) Representative: Strehl Schübel-Hopf & Partner

(57) **Abstract**

A client- server system communication method using an agent for accessing an application server according to a request instruction issued by a client terminal. The client terminal sets up a communication path, sends a request instruction for acquiring desired data to an agent server by communication means, and then disconnects the communication path after sending the request instruction to the agent server. Upon receiving the request instruction, the agent server supplies it to the agent. Then, according to the request instruction, the agent makes proxy access to the application server on behalf of the client terminal. When result data attained through proxy access is reported from the agent, the agent server returns the result data to the client terminal. Then, the client terminal sets up a communication path for receiving the result data.

## Description

### BACKGROUND OF THE INVENTION

### Field of the Invention

The present invention relates to a data communication technique, and more particularly to a mobile data communication technique for improvements in accessing a server from a client computer by means of wireless communication or wire communication.

### Description of Related Art

In mobile communication, data compression programming and connection minimization programming are adopted for making the most efficient use of expensive radio link resources as reported in "Mobilizing Applications; Stefan G. Hild, Peter Robinson; IEEE Personal Communications, October 1997, Vol. 4, No. 5, p. 26 - p. 28." However, an increase in the amount of transaction data transferred between a client and a server results in an increase in the cost of communication. For reducing the amount of transaction data transferred therebetween and circumventing augmentation in complexity in operations on the client, it has been proposed to provide an arrangement in which an agent is disposed between the client and the server. In implementation of this arrangement, however, it is required to employ a dedicated platform or make substantial modification in various application software for using the agent.

As a method for eliminating useless connection time of a communication link, it has been proposed to supervise an idle time after establishment of a communication link and disconnect the communication link if a predetermined period of idle time persists. In this method, however, since a communication operation of a client is not independent of that of a server, the current session in progress may be terminated upon disconnection of the communication link. Thus, any application software being active may also be terminated at the time of disconnection of the communication link, thereby preventing the client from receiving the result of service processing as desired.

On the other hand, as reported in "Messaging Middleware; The Next Generation; Max Dolgicer, International Systems Group Inc.; Data Communications INTERNATIONAL, July 1994, Vol 23, No. 10, p. 77 to p. 79," asynchronous communication operations may be carried out so that a client can transmit data regardless of the current state of a server and the server can receive data regardless of the current communication operation of the client. However, for realizing this asynchronous communication method, it is required to use communication software having a queuing function or to provide an internal buffer, i.e., a dedicated, complex message- queue- based communication environment must be provided at both the client and server. Therefore, the above asynchronous communication method is not necessarily applicable to any client. Further, in data transmission from the server to the client by the asynchronous communication method noted above, there is a disadvantage that a call- back mechanism or the like must be provided additionally since no trigger is available.

In recent years, the World Wide Web on the Internet (hereinafter just referred to as Web) has come into widespread use since a computer user can retrieve various information from networked computers easily with a browser. Therefore, conventional networked information systems requiring the use of dedicated client software are being modified so that they can be used via the Web.

In access to these information systems via the Web, in use of such service as information retrieval system service offered on the Web, or in access to any information available on the Web, a communication line and an application program such as a browser must be kept active until the result of service processing is returned to a client after a request for service is issued. In a situation where the Internet or a connection to a server requested to carry out service processing is congested or a certain period of time is required for service processing, it takes a substantial amount of time for the client to receive the result of service processing after making a request for service. If the communication line being used is disconnected before arrival of the result of service processing, the current session in progress comes to an end to terminate the service processing.

Therefore, in mobile communication in which a cellular telephone or ordinary telephone is used to access the Web, for example, since a communication line must be held connected until arrival of the result of service processing, a communication charge may also be made for any useless connection period. Further, since the communication line cannot be disconnected until arrival of the result of service processing, it is not allowed for the client to move to another location or to access another address, i.e., there is a disadvantage that the client cannot perform another task while waiting for arrival of the result of service processing from the server requested to provide service.

### SUMMARY OF THE INVENTION

It is therefore an object of the present invention to provide a mobile communication technique, agent- based proxy access technique and Web access technique for allowing a client to reduce a waiting time taken for attaining the result of service processing from a server and to save the cost of communication associated with the waiting time, which are versatile for general- purpose use and reliable for the client to acquire the result of service processing in a simple communication environment.

Another object of the present invention is to provide a communication method, communication system and communication apparatus using the aforesaid techniques, which are particularly suitable for mobile communication.

In accomplishing these objects of the present invention and according to one aspect thereof, there is provided a means for allowing a service- requesting/receiving terminal, which is a client terminal, to enter a request instruction, or there is provided means for automatically generating a request instruction for proxy access even when the client terminal is not connected to a server that offers services.

Using first communication means, the client terminal communicates with an agent access server only when sending a request instruction thereto. After the request instruction is sent to the agent access server over a communication line, the communication line is disconnected. Meanwhile, upon receiving the request instruction through the first communication means, the agent access server carries out the request instruction through proxy access for service processing.

When the agent access server attains the result of service processing through proxy access, the agent access server returns a notice to the client terminal using second communication means that is independent of the first communication means. After a certain period of time or upon receipt of the notice through the second communication means, the client terminal resumes communication with the agent access server using the first communication means to receive the result of processing attained through proxy access from the agent access server.

### BRIEF DESCRIPTION OF THE DRAWINGS

The present invention will be more apparent from the following detailed description, when taken in conjunction with the accompanying drawings, in which:
FIG. 1 is a system configuration diagram showing a preferred embodiment of the present invention;
FIG. 2 is a block diagram showing functions and linkages of a client terminal, electronic mail server, agent server and application server;
FIG. 3 is a diagram showing a request mail format and a result mail format;
FIG. 4 is a system configuration diagram showing an example where the result of processing is stored into a specified separate storage location;
FIG. 5 is a block diagram showing functions and linkages of the client terminal, electronic mail server, agent server and application server in an example where the result of processing is stored into a specified separate storage location;
FIG. 6 is a diagram showing a request mail format and a result mail format used in an example where a storage location for the result of processing is specified at the client terminal when a request is made;
FIG. 7 is a diagram showing a request mail format and a result mail format used in an example where a storage location for the result of processing is determined at the agent server;
FIG. 8 is a diagram showing a request mail template;
FIG. 9 is a system configuration diagram showing an arrangement for implementing asynchronous Web access communication;
FIG. 10 is a block diagram showing functions and linkages of the client terminal, electronic mail server, agent server and Web server in implementation of asynchronous Web access communication;
FIG. 11 is a diagram showing a proxy access request control table used at the client terminal;
FIG. 12 is a diagram showing a structure of a script generated by a message conversion module in the client terminal;
FIG. 13 is a diagram showing a proxy access receiving control table at the agent server;
FIG. 14 is a flowchart of agent access operation;
FIG. 15 is a flowchart of result transfer operation;
FIG. 16 is a flowchart of agent operation;
FIG. 17 is a flowchart of message conversion operation;
FIG. 18 is a flowchart of Web agent operation;
FIG. 19 is a flowchart of Web server operation;
FIG. 20 is a flowchart of local Web server operation; and
FIG. 21 is a flowchart showing an operational sequence at the client terminal in asynchronous Web access communication.

### DETAILED DESCRIPTION OF THE PREFERRED EMBODIMENTS

The present invention will now be described in detail by way of example with reference to the accompanying drawings. It is to be understood that the present invention is not limited to the following preferred embodiments and that various changes and modifications may be made in the invention without departing from the spirit and scope thereof.

In the following description of the preferred embodiments, the term "agent" denotes an entity that accesses an application server, which carries out a certain task or provides service, on behalf of a client requesting any desired operation or service. The agent has intelligence concerning a procedure for accessing the application server. Upon receiving a request from the client over a communication line, the agent interprets it and accesses the application server (target) over a communication line according to the application server access procedure. Then, when the agent attains the result of processing from the application server, the agent passes it to the client over a communication line. Thus, proxy access communication is carried out by the agent.

Further, the term "electronic mail" as used in the following description denotes information that is sent from a sender to a recipient by means of electronic communication. In an arrangement where an electronic post office is provided for recipients, a sender sends electronic mail to a particular recipient's mail box in the electronic post office. Electronic mail to be transmitted has information containing a destination address, a source address and a message part. Asynchronously with arrival of information from a sender, i.e., independently of time, a recipient can check the mail box in the electronic post office. If any electronic mail addressed to the recipient is found in the mail box, the recipient can take it out of the mail box. The message part of electronic mail may contain binary data and multimedia data as well as text data.

Still further, the term "mobile" as used in the following description is applied to information processing which is conducted from various places including a stop location of movement of a client terminal or during movement of the client terminal. In mobile information processing, the client terminal exchanges necessary information with a company office or organization having an application server, which carries out a certain task or provides service, over a communication line. It is assumed in the present invention that, at a stop location of movement of the client terminal or during movement of the client terminal, there is provided a mobile communication environment in which wireless communication using a cellular telephone or wire communication using a modem connected to an ordinary telephone line is performed for example. In such a mobile communication environment, unlike a local area network environment and a leased line communication environment for dedicated connection between head and branch offices, a transmission speed is slow, a reliability level is low, and also there are disadvantageous factors in terms of communication charge rate and time. In the above- mentioned mobile communication environment, it is therefore undesirable to hold a communication line connected until arrival of the result of processing from the application server.

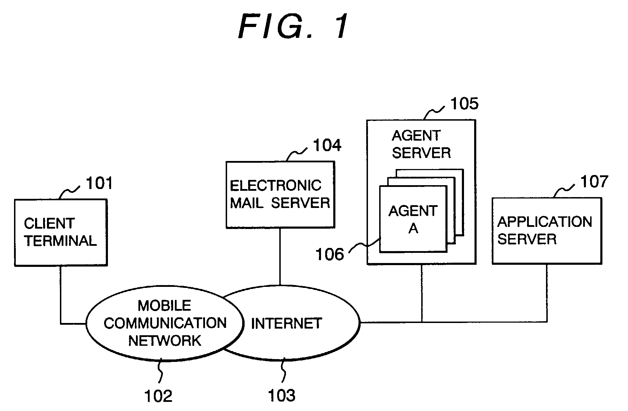

Referring to FIG. 1, there is shown a system configuration in a preferred embodiment of the present invention.

In FIG. 1, reference numeral 101 indicates a client terminal, reference numeral 102 indicates a mobile communication network, reference numeral 103 indicates the Internet, reference numeral 104 indicates an electronic mail server, reference numeral 105 indicates an agent server, reference numeral 106 indicates one of plural agents (implemented in software), and reference numeral 107 indicates an application server.

In this exemplary embodiment, instead of directly communicating with the application server 107 for execution of a desired task, the client terminal 101 used in the mobile communication environment asks the agent 106 in the agent server 105 to act as a proxy for the client terminal 101. By means of electronic mailing through the electronic mail server 104, the client terminal 104 sends an instruction to the agent 106 and receives the result of processing from the agent 106. More specifically, electronic mail addressed to the agent server 105 is sent from the client terminal 101 to the electronic mail server 104 through the mobile communication network 102 and the Internet 103. The agent server 105 constantly monitors the electronic mail server 104 to check if there is any electronic mail addressed to the agent server 105. If electronic mail addressed to the agent server 105 is found in the electronic mail server 104, the agent server 105 receives the electronic mail and checks its contents. Then, if the electronic mail contains an instruction for operation to be executed by the agent A 106 in the agent server 105, the agent server 105 gives the instruction to the agent A 106 for execution. According to the instruction, the agent A 106 acts as if it were the client terminal 101 to the application server 107. Thus, the agent A 106 makes proxy access to the application server 107 on behalf of the client terminal 101. Through communication with the application server 107, the agent A 106 receives the result of processing executed by the application server 107. Then, for informing the client terminal 101 of the result of processing, electronic mail containing the result of processing, which is addressed to the client terminal 101, is sent to the electronic mail server 104. The client terminal 101 checks the electronic mail server 104 to see if the electronic mail server 104 has the electronic mail containing the result of processing which is addressed to the client terminal 101. If the electronic mail addressed to the client terminal 101 is found in the electronic mail server 104, the client terminal 101 receives it from the electronic mail server 104. Thus, the client terminal 101 can attain the result of processing executed by the application server 107.

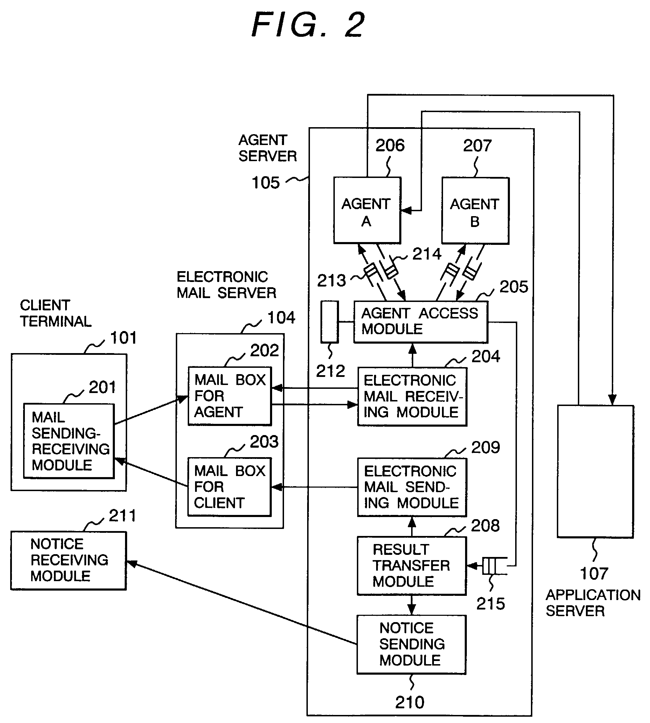

Referring to FIG. 2, there is shown a block diagram for indicating further details of the above- mentioned operation. Necessary component elements and functional linkages thereamong are indicated in FIG. 2. The functions indicated in FIG. 2 may be implemented as ordinary computer software programs that run on the client terminal 101, electronic mail server 104 and agent server 105.

Reference numerals 101 to 107 in FIG. 2 designate the same entities as those shown in FIG. 1. Reference numeral 201 indicates a mail sending- receiving module, reference numeral 202 indicates a mail box for agent server, reference numeral 203 indicates a mail box for client, reference numeral 204 indicates an electronic mail receiving module, reference numeral 205 indicates an agent access module, reference numeral 206 indicates an agent A, reference numeral 207 indicates an agent B, reference numeral 208 indicates a result transfer module, reference numeral 209 indicates an electronic mail sending module, reference numeral 210 indicates a notice sending module, reference numeral 211 indicates a notice receiving module, reference numeral 212 indicates a receiving control table, reference numeral 213 indicates a receiving queue of agent A, reference numeral 214 indicates a result queue of agent A, and reference numeral 215 indicates a transfer request queue.

Electronic mail indicating proxy access to an agent, created on the client terminal 101, is sent from the mail sending- receiving module 201 to the mail box for agent server 202 in the electronic mail server 104. The electronic mail receiving module 204 in the agent server 105 constantly monitors the inside of the mail box for agent server 202 to check if there is any mail addressed to the agent server 105. If electronic mail addressed to the agent server 105 is found, the agent server 105 receives the electronic mail and passes it to the agent access module 205. The agent access module 205 checks the contents of the electronic mail and determines an agent to which the electronic mail is to be passed. As an example herein, the agent access module 205 passes the electronic mail to the agent A 206. According to the contents indicated in the electronic mail, the agent A 206 acts as if it were the client terminal 101 for accessing the application server 107. Thus, the agent A 206 makes proxy access to the application server 107 on behalf of the client terminal 101.

Thereafter, through communication with the application server 107, the agent A 206 receives the result of processing executed by the application server 107, and the agent A 206 passes the result of processing to the agent access module 205. Then, to the result transfer module 208, the agent access module 205 passes the result of processing together with electronic mail address information on the client terminal 101. For transferring the result of processing to the client terminal 101, the result transfer module 208 sets up a mail destination address and puts the result of processing in a form of electronic mail. The result transfer module 208 then passes the electronic mail containing the result of processing to the electronic mail sending module 209, from which the electronic mail containing the result of processing is sent to the mail box for client 203 in the electronic mail server 104. Meanwhile, after passing the electronic mail containing the result of processing to the electronic mail sending module 209, the result transfer module 208 instructs the notice sending module 210 to inform the client terminal 101 of the completion of processing separately from the electronic mail containing the result of processing, i.e., by any communication means other than that used for returning the electronic mail containing the result of processing. For instance, pager communication or cellular telephone short-message service communication may be used for this purpose. It is necessary to let a mobile user of the client terminal 101 know whether the processing requested by the user has been completed or not, and it is preferable to provide such an arrangement that the user is not required to constantly check for arrival of the electronic mail containing the result of processing. Using pager communication or cellular telephone short- message service communication, for example, a notice message can be sent to the user in real time unilaterally regardless of the current mailing or operating state of the client terminal 101. When the notice sending module 210 transmits a message "SEARCH PROCESSING COMPLETE" for example, the notice receiving module 211 of the client terminal 101 receives the message "SEARCH PROCESSING COMPLETE" and the user can know that the search processing requested by the user has been completed. Then, the client terminal 101 accesses the electronic mail server 104 and receives the electronic mail containing the result of processing (addressed to the client terminal 101) from the mail box for client 203 in the electronic mail server 104. Thus, the client terminal 101 can attain the result of processing executed by the application server 107.

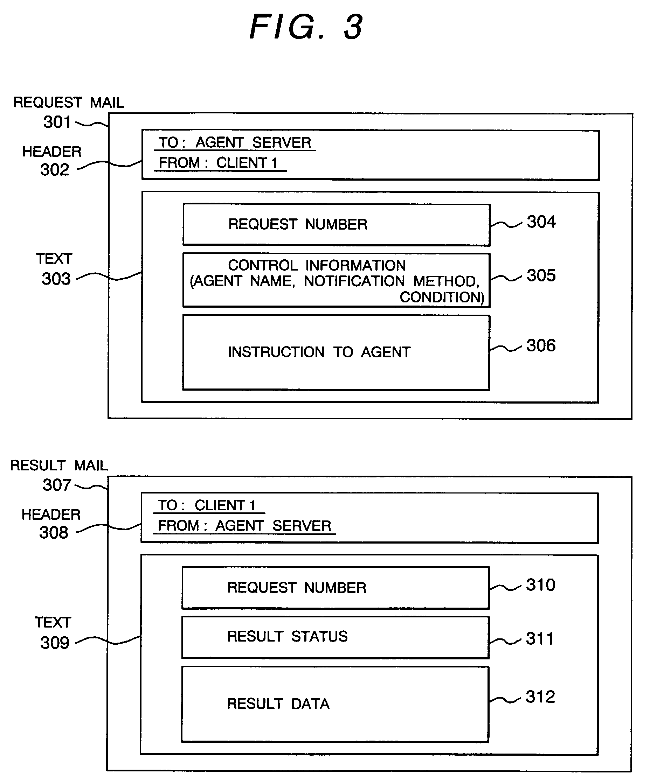

Referring to FIG. 3, there are shown an electronic mail format to be used when the client terminal 101 requests the agent server 105 to make proxy access, and an electronic mail format to be used when the agent server 105 returns the result of processing attained through proxy access to the client terminal 101.

In FIG. 3, reference numeral 301 presents a request mail format. In the request mail format, reference numeral 302 indicates a header, reference numeral 303 indicates a mail text, reference numeral 304 indicates a request number, reference numeral 305 indicates agent control information, and reference numeral 306 indicates an instruction to agent. Reference numeral 307 presents a result mail format. In the result mail format, reference numeral 308 indicates a header, reference numeral 309 indicates a mail text, reference numeral 310 indicates a request number, reference numeral 311 indicates a result status, and reference numeral 312 indicates result data.

Request mail indicating a request for proxy access, which is addressed to the agent server 105, is issued from the client terminal 101. In the header 302 of the request mail, an agent server name is designated as a destination address item and a client name is designated as a source address item. The request number 304 in the mail text 303 is used as control information for identifying one of plural requests made by the client terminal 101. Thus, the result of processing to be received later can be associated with its corresponding request number. The agent control information 305 contains control information necessary for the agent server 106 to handle the request mail. More specifically, the agent control information 305 indicates an agent in the agent server 105, a result notification method, and a result notification condition. The instruction to agent 306 contains particular instruction information to be given to a specified agent, such as a command- parameter combination and script.

Result mail containing result data of proxy access, which is addressed to the client terminal 101, is issued from the agent server 105. In the header 308 of the result mail, a client name is designated as a destination address item and an agent server name is designated as a source address item. The request number 310 in the mail text 309 is used as control information for identifying one of plural requests made by the client terminal 101. Thus, the result of processing can be associated with its corresponding request number. The result status 311 indicates whether the processing in the agent server 105 for the request has been accomplished successfully or not. The result data 312 contains result data received from the agent.

In the present preferred embodiment, according to the contents specified in the text of the request mail, a determination is formed to select one of agents in the agent server 105 for execution of proxy access. In a modified embodiment of the invention, an mail address may be used to identify an agent.

As shown in FIG. 2, the present preferred embodiment is characterized in that the agent server 105 is provided with the agent access module 205 and the result transfer module 208. Before proceeding to details of operations concerning these modules, the following describes the receiving control table 212 which is provided in the agent server 105 for the purpose of controlling requests issued from client terminals.

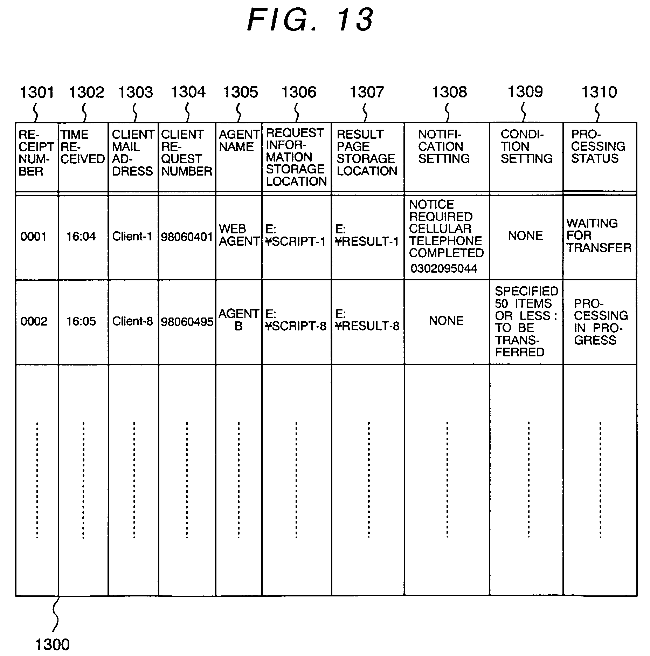

Referring to FIG. 13, there is shown a receiving control table for proxy access in the agent server 105.

The proxy access receiving control table 1300 (equivalent to the receiving control table 212 noted above) in the agent server 105 contains the following items; receipt number 1301, time received 1302, client mail address 1303, client request number 1304, requested agent name 1305, request information storage location 1306, result page storage location 1307, notification setting 1308, condition setting 1309, and processing status 1310.

The receiving control table 1300 is prepared by the agent access module 205 in the agent server 105 according to the contents of request mail from each client terminal. The receipt number 1301 indicates a request receipt number to be used for control by the agent server 105. Upon receiving each request mail, the agent access module 205 assigns a receipt number to it. The time received 1302 indicates a point of time the request mail has been received. The client mail address 1303 indicates a mail address of each client terminal, which is used for returning result data to the client terminal. The client request number 1304 indicates a request number specified on the client terminal. When result data is returned to the client terminal, the client request number is returned together with it. Thus, the client terminal can determine which request number corresponds to the returned result data. The requested agent name 1305 indicates a name of each agent in the agent server 105, which is requested to make proxy access. The request information storage location 1306 indicates a storage location in the agent server 105, which is used for storing request information including a proxy access script part contained in the text of electronic mail. The result page storage location 1307 indicates a storage location in the agent server 105, which is used for storing result data attained through the agent. The contents of the result page storage location are put into result mail to be returned to the client terminal.

The notification setting 1308 is used to indicate information concerning a notification method for notifying the client terminal of the completion of processing as specified in the request mail. More specifically, this information indicates whether or not to notify the client terminal of the completion of processing, and it also contains a notice message and access number. The condition setting 1309 is used to indicate information concerning a condition to be taken according to the amount of result data when the result data is returned from the agent to the client terminal. For instance, in the "CONDITION SETTING" field for request mail, the allowable maximum amount of result data is specified. Then, if the amount of result data attained through proxy access is too large, any one of the following operations is selected; 1) transfer of only the notice of completion of processing, 2) transfer of only the data corresponding to the specified number of items, and 3) transfer of the notice of completion of processing and storage of result data into a separate location. Thus, a transfer operation of result data can be controlled according to the condition setting. Based on result data returned from the agent, the agent server 105 sends back result mail. Thereafter, according to the notification setting 1308 and the condition setting 1309, the agent server 105 carries out notification operation. The processing status 1310 is used to indicate a status of processing for a request corresponding to each receipt number. For instance, it is indicated whether the request concerned is being processed by the agent or the result data concerned is waiting for mail transfer operation. By checking the processing status 1310 and comparing the time received 1302 with the current time, it can be determined whether or not arrival of result data is delayed for a long period of time after a request is made to the agent. Through this determination, abortion of processing or any other control operation is carried out.

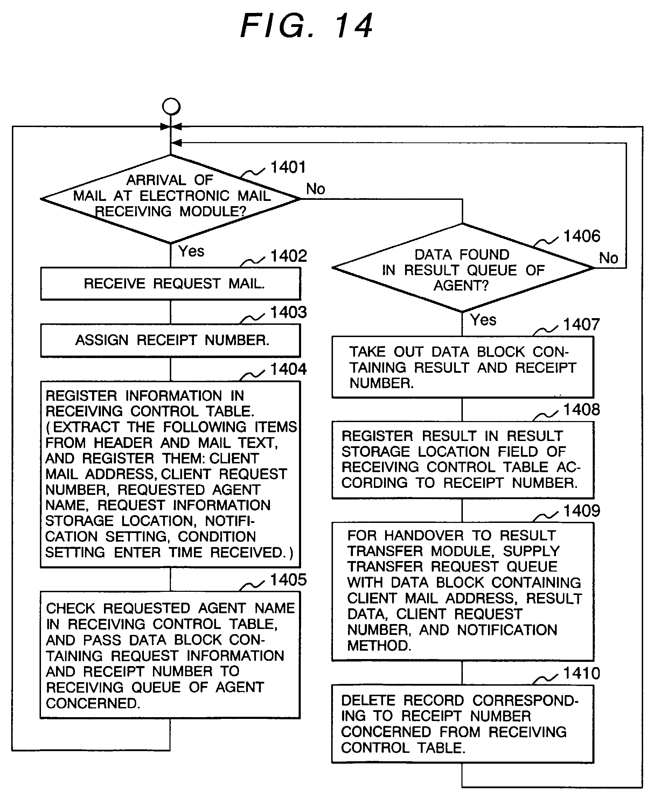

Then, with reference to FIG. 14, the following describes the processing operation flow of the agent access module 205 which operates using the receiving control table mentioned above. The processing operation flow shown in FIG. 14 may be implemented as a program running on an ordinary computer.

Referring to FIG. 14, in the agent access module 205, process 1401 is provided to monitor whether there is request mail in the electronic mail receiving module 204, and process 1406 is provided to monitor whether there is result data in the result queue 214 of each agent.

If request mail is found in the electronic mail receiving module 204, process 1402 receives the request mail and assigns a receipt number thereto. Then, at process 1404, the client mail address, request number, requested agent name, request information (instruction to agent) storage location, notification setting, and condition setting are extracted from the header and text of the request mail, and these data items are registered into the receiving control table 1300 shown in FIG. 13. Then, at process 1405, the contents of the receiving control table are checked to identify the requested agent name, and a data block containing the request information and receipt number is passed to the receiving queue 213 of the agent concerned.

Thereafter, it is monitored again whether there is subsequent request mail in the electronic mail receiving module 204 or whether there is result data in the result queue 214 of each agent. If process 1406 finds result data from any agent, i.e., if result data is supplied to the result queue 214 of any agent, control goes to process 1407. Then, at process 1407, a data block containing the result data and receipt number is taken out, and at process 1408, the result is registered into the result storage location field of the receiving control table according to the receipt number. At process 1409, an operation for hand over to the result transfer module 208 is performed. For this purpose, a data block containing the client mail address, result data, client request number, notification setting and condition setting is supplied to the transfer request queue 215 of the result transfer module 208.

At process 1410, the record corresponding to the receipt number concerned is deleted from the receiving control table. Then, control is returned to process 1401. In an iterative manner, process 1401 monitors whether there is subsequent request mail, and process 1406 monitors whether there is subsequent result data from any agent.

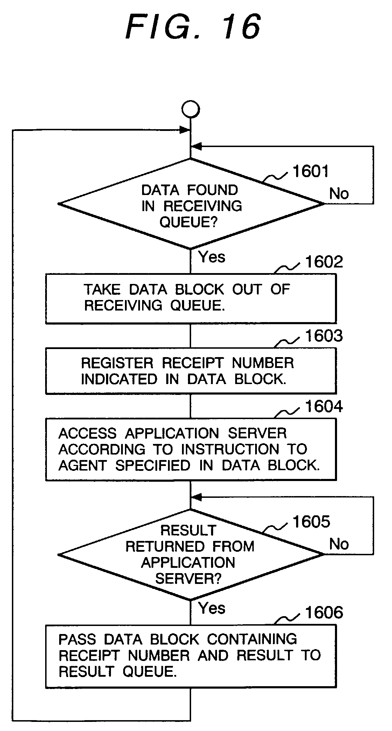

On the other hand, the agent 206 which is operatively associated with the agent access module 205 carries out its processing operation as flowcharted in FIG. 16. In FIG. 16, there is shown a flowchart of operation of the agent 206 in the agent server. The processing operation flow shown in FIG. 16 may be implemented as a program running on an ordinary computer.

In the agent, process 1601 constantly monitors whether any data is supplied to the receiving queue 213. If any data is found in the receiving queue 213, control goes to process 1602. At process 1602, a data block is taken out of the receiving queue 213. At process 1603, a receipt number indicated in the data block is registered. At process 1604, an instruction to the agent specified in the data block is carried out. In this example, access is made to the application server that provides service supported by the agent. Then, at process 1605, it is monitored whether result data is returned from the application server which has been accessed. If result data returned from the application server is found, process 1606 stores the result data into a data block together with the receipt number concerned, and process 1606 passes the data block to the result queue 214. Thereafter, control is returned to process 1601 for monitoring whether there is subsequent data in the receiving queue 213.

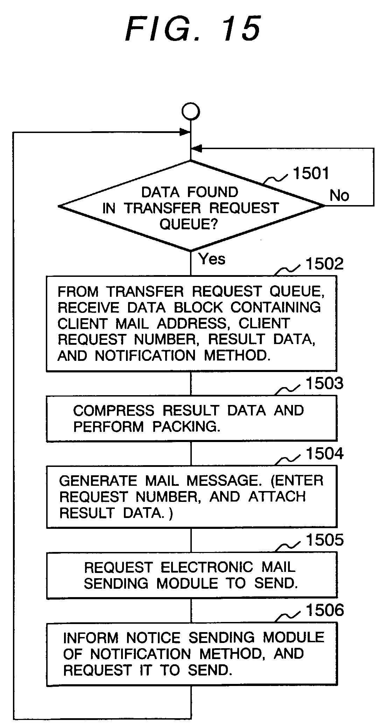

Then, referring to FIG. 15, the processing operation flow of the result transfer module 208 is described below. The processing operation flow shown in FIG. 15 may be implemented as a program running on an ordinary computer.

In the result transfer module 208, process 1501 constantly monitors whether any data is supplied to the transfer request queue 215. If any data is found in the transfer request queue 215, control goes to process 1502. At process 1502, a data block containing a client mail address, client request number, result data, notification setting and condition setting is received from the transfer request queue 215. At process 1503, the result data is compressed, and if a plurality of result data files are provided, these data files are packed into a single file. At process 1504, an electronic mail message is generated. More specifically, the request number is entered in the text part of electronic mail, and the packed result data is attached to the electronic mail. Then, at process 1505, a request to send the electronic mail is made to the electronic mail sending module 209. At process 1506, the notice sending module 210 is informed of the notification setting and condition setting. Thus, the notice sending module 210 is requested to send notice to the client concerned. Thereafter, control is returned to process 1501 for monitoring whether there is subsequent data in the transfer request queue 215.

The notice sending module 210, which has been requested to send notice according to the notification setting and condition setting in the processing operation flow described above, notifies the client that the result data has been attained. For this notification, the notice sending module 210 uses a notice communication path which is independent of a communication path employed for transmission of the electronic mail mentioned above.

At this step, the result transfer module 208 may also transfer the request number concerned to the notice sending module 210, thereby making it possible for the notice sending module 210 to notify the client of the request number through pager communication or cellular telephone short- message service communication. Thus, the client can know which request number corresponds to the result data to be received by electronic mail.

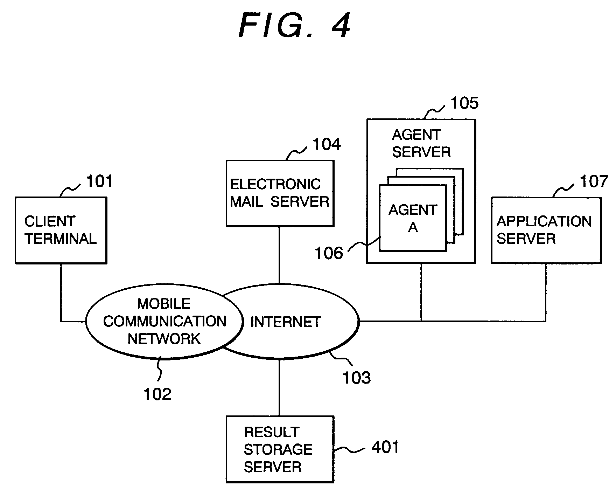

Then, referring to FIG. 4, the following describes a preferred embodiment in which the result of processing through proxy access can be stored into a directory on a server specified by the client.

Reference numerals 101 to 107 in FIG. 4 designate the same entities as those shown in FIG. 1. In FIG. 4, a result storage server 401 is provided additionally.

In the present preferred embodiment, the result of processing through proxy access from the agent to the application server is not returned to the client by electronic mail but the result of processing is stored into a specified storage area in the result storage server 401. In this arrangement, since the result of processing through proxy access is stored into the result storage server 401, it can be accessed by and shared with other persons than the user who has requested proxy access.

Further, in an instance where the amount of result data of processing through proxy access is substantially large, it may be undesirable to return the result data by electronic mail. In such a case, the result data is stored into the result storage server 401, and any part of the result data stored therein can be checked online from the client terminal. A Web server, FTP server or any other server capable of storing data is applicable as the result storage server 401.

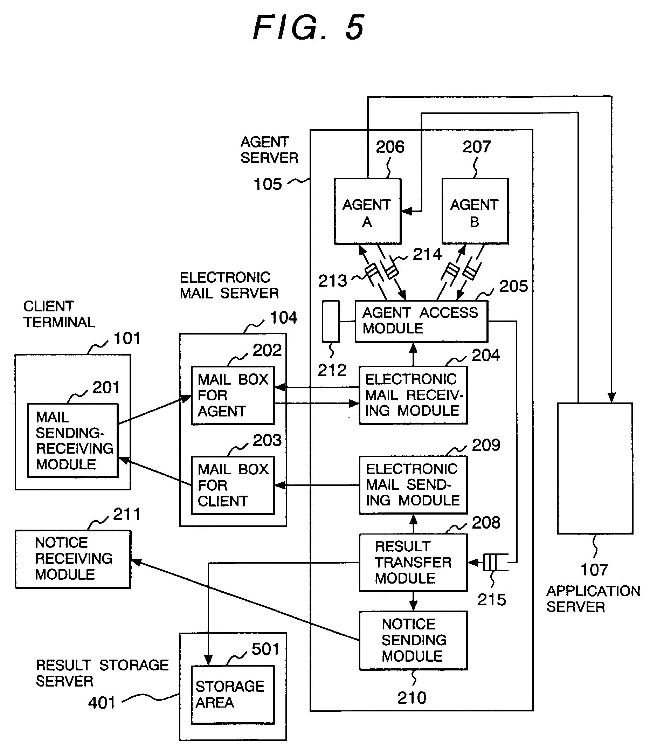

Referring to FIG. 5, there is shown a block diagram for indicating further details of the above- mentioned operation. Necessary component elements and functional linkages thereamong are indicated in FIG. 5. The functions indicated in FIG. 5 may be implemented as programs running on ordinary computers.

Reference numerals 101 to 107 and reference numerals 201 to 211 in FIG. 5 designate the same entities as those shown in FIGS. 1 and 2. Reference numeral 501 designates a directory of a storage area in the result storage server 401.

When the agent access module 205 receives the result of processing from the agent, the result of processing and "information concerning result storage location" specified in the request mail are sent from the agent access module 205 to the result transfer module 208. Then, according to the "information concerning result storage location," the result transfer module 208 transfers the result of processing to the storage area 501 corresponding to a server directory specified by the client. For this operation, a file transfer program or the like is used. To the electronic mail sending module 209, the result transfer module 208 passes only a mail message indicating completion of processing. That is, the result transfer module 208 does not pass the result data to the electronic mail sending module 209. Further, as specified by the client, the result transfer module 208 instructs the notice sending module 210 to promptly send a notice of completion to the client through pager communication or cellular telephone short- message service communication.

In the arrangement shown in FIG. 5, the notice sending module 210 can be implemented in the same manner as that shown in FIG. 2.

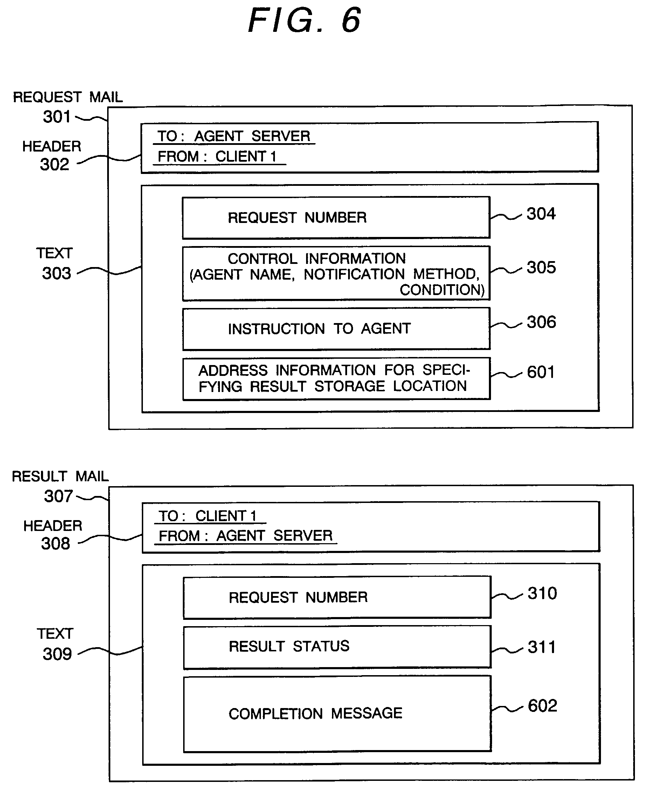

Referring to FIG. 6, there are shown an electronic mail format to be used when the client requests the agent to perform proxy access and to store the result of processing through proxy access into a specified storage location, and an electronic mail format to be used when the agent informs the client that the processing through proxy access by the agent has been completed.

In FIG. 6, reference numeral 301 indicates a request mail format. Reference numerals 302 to 306 in the request mail format designate the same parts as those described in the foregoing. Reference numeral 601 designates address information for specifying a result storage location.

Further, in FIG. 6, reference numeral 307 indicates a result mail format. Reference numerals 307 to 311 in the result mail format designate the same parts as those described in the foregoing. Reference numeral 602 designates a message indicating completion of processing through proxy access.

In request mail, the address information for specifying a result storage location 601 is entered in addition to an instruction to the agent for proxy access. That is, an address indicating a directory of a Web server for storing result data is specified. Thus, the result data is not returned to the client by mail, but it is stored into a specified storage location.

In result mail, the message indicating completion of processing 602 is entered. Since the result data attained through proxy access is stored into the storage location specified in the request mail, the message indicating completion of processing 602 is entered in the result mail to be returned to the client.

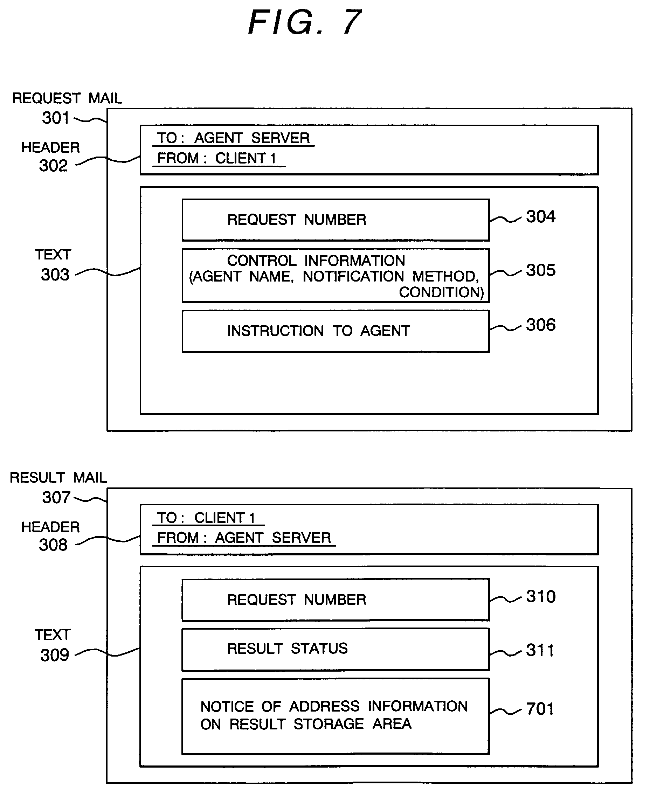

Referring to FIG. 7, there is shown an exemplary embodiment in which a result storage area field is provided in the result mail so that the agent server can determine a storage area for storing the result of processing through proxy access.

In this exemplary embodiment, the agent server determines a result storage area while the client specifies a result storage location in the example mentioned above.

In FIG. 7, the request mail 301 has agent control information and instruction information but it does not contain address information for specifying a result storage location. When this kind of request mail is received by the agent server, the agent server determines a result storage area as shown in the result mail 307. By checking a notice of address information on a result storage area 701 indicated in the result mail 307, the client can know the result storage area determined by the agent server.

The present exemplary embodiment is advantageous where storage locations for result data are managed by the agent server in lieu of the client. In this arrangement, result data is not returned to the client terminal which is on the move. For instance, the client makes presetting so that the agent server will store result data into a result storage server in his or her office. Then, after making each request for proxy access, the client receives electronic mail that contains a notice message indicating in which directory the result data has been stored on the result storage server in the office. Further, in access to a database, if a range of search conditions is not narrowed sufficiently, the amount of result data maybe too large to send by electric mail. In such a case, according to the condition setting specified in the request mail, the agent server forms a determination to temporarily store the result data into a directory in a certain server. Then, after the result data is temporarily stored, electronic mail is returned to the client to inform him or her of the directory and server used for temporary storage of the result data.

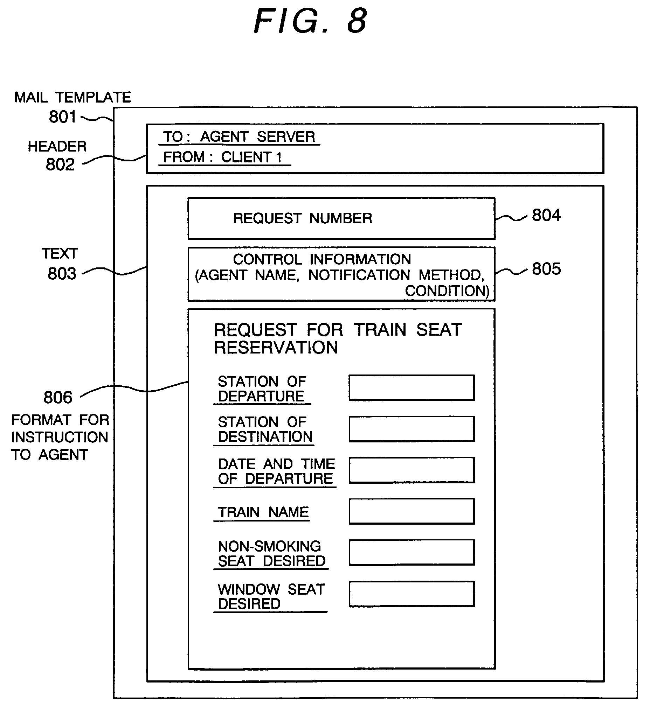

The following describes an exemplary embodiment in which a template is used for making it easy to enter an "instruction to agent" in request mail for proxy access. In FIG. 8, there is shown a request mail template in which the client has only to enter necessary information. This template may be modified just by changing sample items indicated thereon.

A request mail template such as shown in FIG. 8 is prepared beforehand for each service. When sending request mail for proxy access, the user can specify an "instruction to agent" easily. That is, just by filling in blanks in the request mail template, the user can give an instruction to the agent.

Referring to FIG. 8, reference numeral 801 indicates an exemplary template for request mail to be used when specifying proxy access for train seat reservation service. In this request mail template, reference numeral 802 indicates a header, reference numeral 803 indicates a text, reference numeral 804 indicates a request number, reference numeral 805 indicates agent control information, and reference numeral 806 indicates a format for an "instruction to agent."

For making it easy to use train seat reservation service, necessary input fields for such items as a station of departure, station of destination, date and time of departure, and train name are provided on the template. The user has only to fill in these input fields. Electronic mail created using the template is sent to the agent server. Upon receiving the electronic mail, the agent access module 205 in FIG. 2 extracts item data of each input field, which is then passed to the agent A 206.

The following describes a preferred embodiment in which the user makes a request for Web access and thereafter the user receives the result of processing attained through Web access.

In the present preferred embodiment, a general browser program is used since its user interface is advantageous in that interactive operation is allowed and in that multimedia data can be handled.

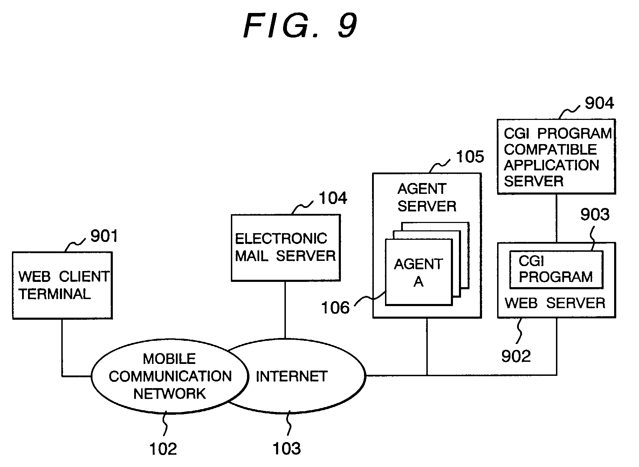

Referring to FIG. 9, there is shown a system configuration arranged for implementing asynchronous Web access communication. Reference numerals 102 to 106 in FIG. 9 designate the same entities as those shown in FIG. 1. Reference numeral 901 indicates a client terminal for Web access, reference numeral 902 indicates a Web server that provides desired information to be attained through mobile access communication, reference numeral 903 indicates a CGI (Common Gateway Interface) program running on the Web server, and reference numeral 904 indicates a CGI program compatible application server.

While electronic mailing is employed as a means of communication between the client terminal and the agent server in the present preferred embodiment, the invention is not limited in its application thereto, i.e., any communication means other than electronic mailing may be employed for implementation.

In the present preferred embodiment, the Web client terminal 901 does not make direct access to the Web server 902 on the Internet in an ordinary fashion, but the Web client terminal 901 requests the agent server 105 to make proxy access to the Web server 902, i.e., on behalf of the Web client terminal 901, the agent server 105 makes proxy access to the Web server 902. Then, access to the CGI program compatible application server 904 is provided in a similar manner. When the agent server 105 makes proxy access to the Web server 902, the CGI program 903 in the Web server 902 is started to call the CGI program compatible application server 904, in which service processing is then carried out. For this operation, the Web client terminal 901 prepares a proxy access instruction to the Web server through the user interface of the Web browser, and sends it to the electronic mail server 104 by electronic mail. Then, the electronic mail server 104 sends the proxy access instruction to the agent server 105. When service processing is completed in the CGI program compatible application server 904, the result of processing is returned therefrom to the agent server 105 through the Web server 902. Upon receiving the result of processing, the agent server 105 sends electronic mail containing the result of processing to the Web client terminal 901 via the electronic mail server 104.

In the arrangement mentioned above, it is not required for the Web client terminal 901 to hold a communication line accessing the Web server until the result of processing is returned. That is, the Web client terminal has only to connect the communication line to the electronic mail server when sending request mail thereto and when receiving result mail therefrom. It is therefore possible to save the amount of communication charge substantially. Further, the Web client terminal 901 is allowed to make use of an idle time which is available until the communication line is reconnected for receiving the result of processing.

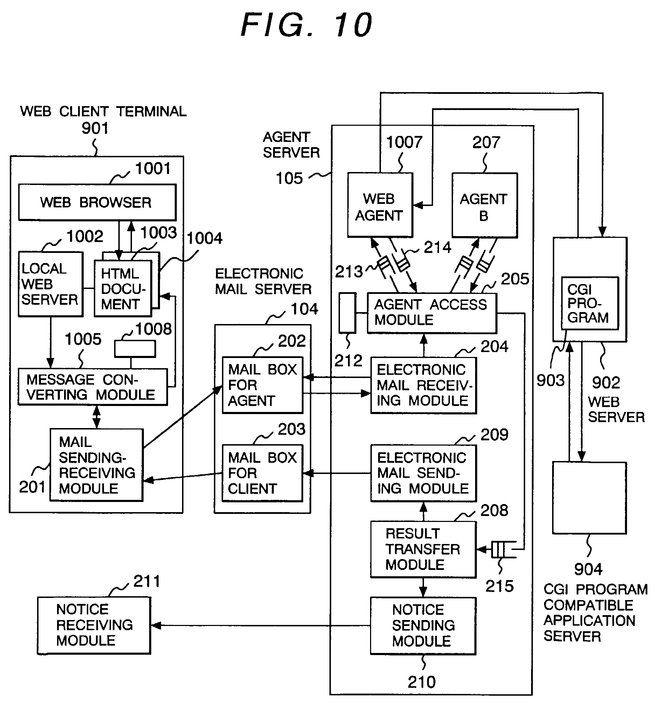

Referring to FIG. 10, there is shown a block diagram indicating functions and linkages of the Web client terminal, electronic mail server, agent server and Web server in implementation of asynchronous Web access communication. The functions indicated in FIG. 10 may be implemented as programs running on ordinary computers.

Reference numerals 104, 105, 201 to 211, and 901 to 904 designate the same entities as those mentioned in the foregoing. The Web client terminal 901 is provided with a Web browser 1001, local Web server 1002, HTML document for access 1003, HTML document for result storage 1004, message converting module 1005, and request control table 1008. Further, the agent server 105 is provided with a Web agent 1007.

For implementation of asynchronous Web access communication using electronic mail as a communication means, the following operation is carried out.

The Web browser 1001 used for Web access is a general browser program. For simulating Web access without connecting a Web communication line (for asynchronous communication), an HTML document of a Web page to be accessed is downloaded in advance and stored as the access HTML document 1003 in the web client terminal 901. In common practice for obtaining service from the application server via the Web server 902, the CGI program in the Web server 902 is started to access the application server. At the step mentioned above, however, since the Web client terminal 901 is not yet connected to the Web server 902, the CGI program in the Web server 902 cannot be started. Hence, in the downloaded access HTML document 1003 in the Web client terminal 901, a part for calling the CGI program used for access to the application server is replaced with a client internal program invocation routine (startup CGI routine). A startup of the CGI program in the Web server 902 is carried out by the Web agent 1007 on a basis of proxy access. More specifically, in the Web browser window displayed on the Web client terminal 901, the user enters conditional information necessary for obtaining service from the application server and presses a button for execution. Then, instead of execution of the CGI program for accessing the application server, the message converting module 1005 which is a client internal program is called up.

Thus, in a state of non- connection, the user enters conditional information and performs execution on the Web client terminal as if it were connected to the actual Web server. For this purpose, the local Web server 1002 is provided in the Web client terminal. When the message converting module 1005 is called by the Web browser in the non- connection state of the Web client terminal, the message converting module 1005 rearranges conditions, items and other parameters specified in the access HTML document 1003 by the user and a name of the CGI program to be started in the Web server. Thus, an instruction to the Web agent 1007 for proxy access to the Web server is prepared.

Then, information on the Web proxy access instruction and specification of the agent for Web proxy access are entered in electronic mail, together with a request number assigned for control. The electronic mail thus prepared is fed to the mail sending- receiving module 201, from which the electronic mail is then sent to the mail box for agent server 202 in the electronic mail server 104. As described in the foregoing, the agent server 105 constantly monitors the electronic mail server 104 to check if there is any electronic mail addressed to the agent server 105. Thus, when the agent server 104 finds the above- mentioned electronic mail in the electronic mail server 104, the agent server 104 receives it. Then, in the agent access module 205, when it is determined that the electronic mail contains a request for proxy access to the Web server, the electronic mail is passed to the Web agent 1007. According to the contents indicated in the electronic mail, the Web agent 1007 acts as if it were the Web client terminal for accessing the Web server 902. Thus, on behalf of the Web client terminal, the Web agent 1007 calls the CGI program 903 to make access to the application server 904. Thereafter, the result of processing in the application server is returned to the Web agent 1007 through the Web server 902.

When the Web agent 1007 receives the result of processing from the application server 904, the Web agent 1007 passes it to the agent access module 205. Then, through the result transfer module 208 and the electronic mail sending module 209, electronic mail containing the result of processing is sent back to the main box for client 203 in the electronic mail server 104. Meanwhile, through the notice sending module 210, a notice indicating the completion of processing is issued to the user at the Web client terminal.

In the configuration shown in FIG. 10, the notice sending module 210 can be implemented in the same fashion as those indicated in FIGS. 2 and 5.

Knowing the completion of processing by means of the notice receiving module 211, the user takes the electronic mail containing the result of processing from the mail box for client 203 in the electronic mail server 104 and feeds it to the message converting module 1005. Since result data received from the application server through the Web server is described in HTML in most cases, the message converting module 1005 stores it and links it with the result storage HTML document 1004. Then, through the use of the Web browser 1001, the user can check the result data linked with the result storage HTML document 1004.

In the arrangement mentioned above, access to the Web server and access to the application server via the Web server for service processing can be utilized asynchronously without the need for holding a communication line thereto. In particular, where an access time to the Web server or a service processing time in the application server is considerably long, the communication time and charge can be saved substantially since a communication line is connected only when request mail is sent from the Web client terminal to the electronic mail server and when result mail is received by the Web client terminal from the electronic mail server.

As shown in FIG. 10, the present preferred embodiment is characterized in that the local Web server 1002 and the message converting module 1005 are provided in the Web client terminal and in that the Web agent 1007, the agent access module 205 and the result transfer module 208 are provided in the agent server.

The following describes details of operation concerning the local Web server in the Web client terminal. The request control table 1008 used as a table in the Web client terminal for controlling each access request using the Web browser, and the structure of a script used for access request from the Web client terminal to the Web server are described. Then, the message converting module 1005 used for generating a script using the request control table is described.

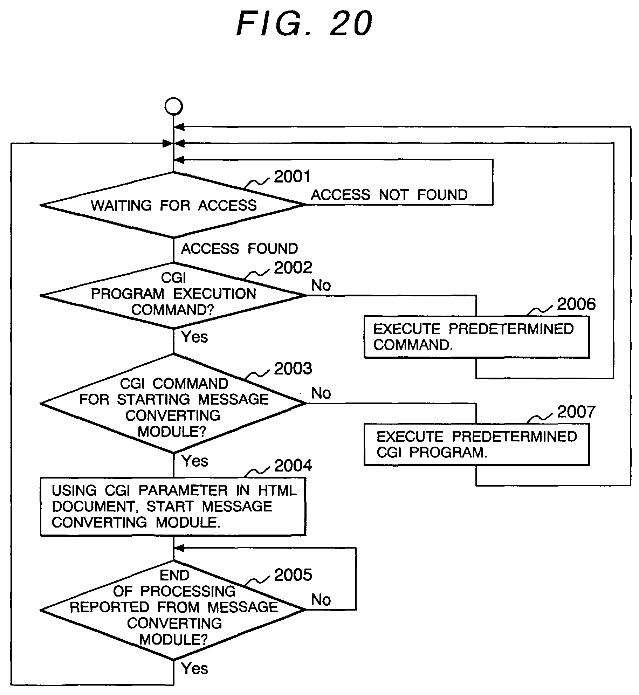

Referring to FIG. 20, there is shown a flowchart of operation of the local Web server. The processing operation flow shown in FIG. 20 may be implemented as a program running on an ordinary computer.

The local Web server, which is located in the Web client terminal, is a general server program (not located in the actual Web server). The local Web server in the present preferred embodiment is described below with particular emphasis on relationship with implementation of the invention.

Through the use of the Web browser 1001, the user opens the access HTML document 1003 to be handled by the local Web server 1002. Then, the local Web server 1002 carries out commands specified in the access HTML document 1003.

At process 2001, the local Web server is in a standby state while constantly monitoring whether the HTML document 1003 is accessed or not. When it is found that the HTML document 1003 is accessed, process 2002 is taken. At process 2002, the contents of an execution command are checked. If the execution command is not for CGI program execution, process 2006 is taken to carry out a predetermined command operation. If the execution command is for CGI program execution but not for starting the message converting module 1005, process 2007 is taken to carry out a predetermined CGI program operation. Thereafter, in either of the above cases, control is returned to process 2001 in which the local Web server waits again until access to the HTML document 1003 is found. If it is found through processes 2002 and 2003 that the execution command is for starting the message converting module 1005, control goes to process 2004 in which the execution command and CGI parameters described in the HTML document 1003 are interpreted for CGI startup. Thus, the message converting module 1005 is started accordingly. Then, at process 2005, the local Web server waits until arrival of information on the end of message conversion processing. When the local Web server is informed of the end of message conversion processing, control is returned to process 2001 in which the local Web server waits again until access to the HTML document 1003 is found.

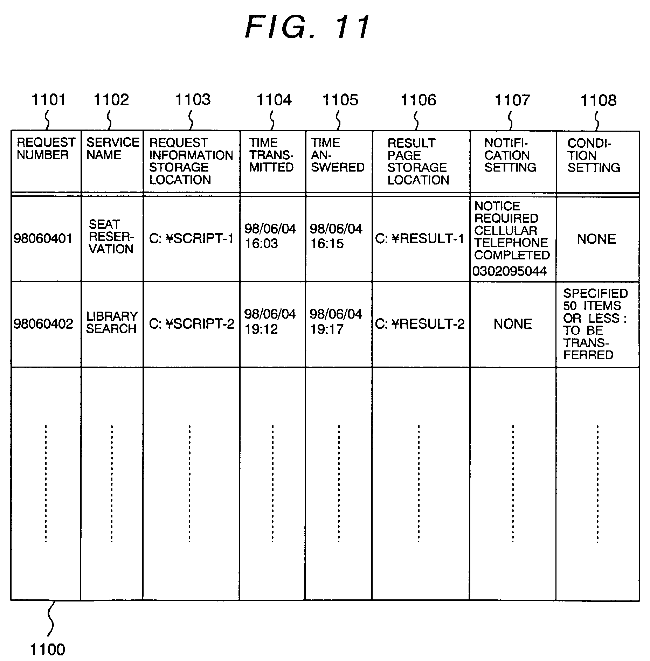

The request control table 1008 for proxy access operation at the Web client terminal 901 is shown in FIG. 11.

The proxy access request control table 1100 (equivalent to the request control table 1008 noted above) in the Web client terminal contains the following items; request number 1101, service name 1102, request information storage location 1103, time transmitted 1104, time answered 1105, result page storage location 1106, notification setting 1107, and condition setting 1108.

According to input by the user through the Web browser, the message converting module 1005 in the Web client terminal enters a request for proxy access in the proxy access request control table 1100. The request number 1101 indicates a request number assigned for each proxy access request made by the user. Each request number is used for controlling a request for proxy access to an agent and a procedure to be taken for the result of processing through proxy access. In cases where a plurality of requests are made at the same time or the next request is issued before reception of the result of processing for the current request, each request number is used as control information for identifying one of the plural requests. The service name 1102 indicates a name of service offered by the agent through proxy access. The request information storage location 1103 indicates a storage location in the Web client terminal, which is used for storing Web input information, CGI program start command information, and command- parameter information for communication with the Web server (to be connected to the application server) in proxy access made by the agent. The time transmitted 1104 indicates a point of time the request mail has been sent. The time answered 1105 indicates a point of time the result mail has been returned from the agent. The result page storage location 1106 indicates a storage location in the Web client terminal, which is used for storing result data returned from the agent. Through the use of the Web browser, the user can take result data out of the result page storage location to check it in the Web browser window. The notification setting 1107 is used to indicate whether or not to notify the user of the completion of processing by any independent communication means other than electronic mailing. The notification setting 1107 also indicates a notice message to be issued at the time of notification of the completion of processing. The condition setting 1108 is used to indicate information concerning a condition to be taken according to the amount of result data, e.g., a condition for determining whether or not to transfer the result data to another storage location.

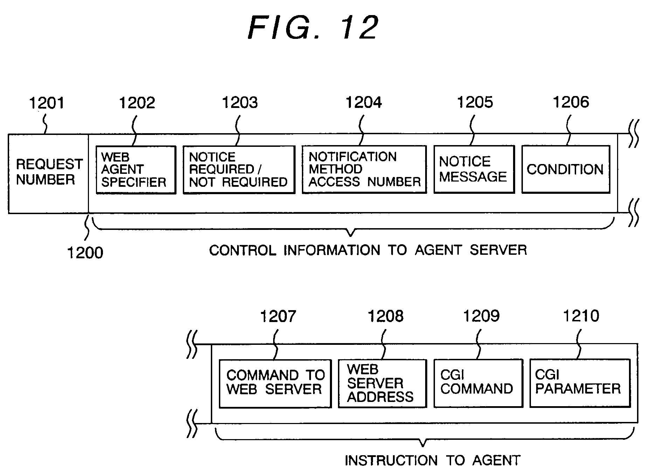

Referring to FIG. 12, there is shown a structure of a script generated by the message converting module 1105 in the Web client terminal.

A script 1200 generated by the message converting module 1005 in the Web client terminal contains the following items; request number 1201, Web agent specifier 1202, notice required/not required 1203, notification method and access number 1204, notice message 1205, condition 1206, command to Web server 1207, Web server address 1208, CGI command 1209, and CGI parameters 1210.

The data format of script 1200, generated by the message converting module 1105 in the Web client terminal, is used in electronic mail to be sent for requesting an agent to provide proxy access. The item 1201 indicates a request number used for control on the Web client terminal. The item 1202 specifies an agent in the agent server. In the present example, the Web agent is specified for making a request for proxy Web access. The item 1203 is a flag indicating whether or not to make notification. The item 1204 indicates a notification method and access number, i.e., it is used to specify a notification arrangement employing any communication means other than electronic mailing, for example, pager communication or cellular telephone short- message service communication. A telephone number (destination of message) and type are also specified in the item 1204, for example. The item 1205 indicates a notice message to be issued from the agent. The item 1206 is used to enter a specified condition necessary for control according to the amount of result data. These items 1201 to 1206 constitute a data group to be applied to control mechanisms in the agent server.

On the other hand, the items 1207 to 1210 constitute a data group to be used by the agent when actually making proxy access to the Web server and the application server connected therewith. The item 1207 indicates a command to the Web server. In the present example, the item 1207 contains a command for CGI server startup and information on parameter passing in order to obtain service. The item 1208 indicates an address of the Web server. The item 1209 indicates a CGI command for accessing the application server, and the item 1210 indicates a parameter group to be appended to the CGI command.

Information input by the user through the Web browser is fed to the message converting module 1005, from which it is entered into the request control table 1100 shown in FIG. 11. Then, according to the contents of the request control table, the script 1200 shown in FIG. 12 is generated. Thereafter, the script 1200 is included in the text part of electronic mail and sent to the agent server.

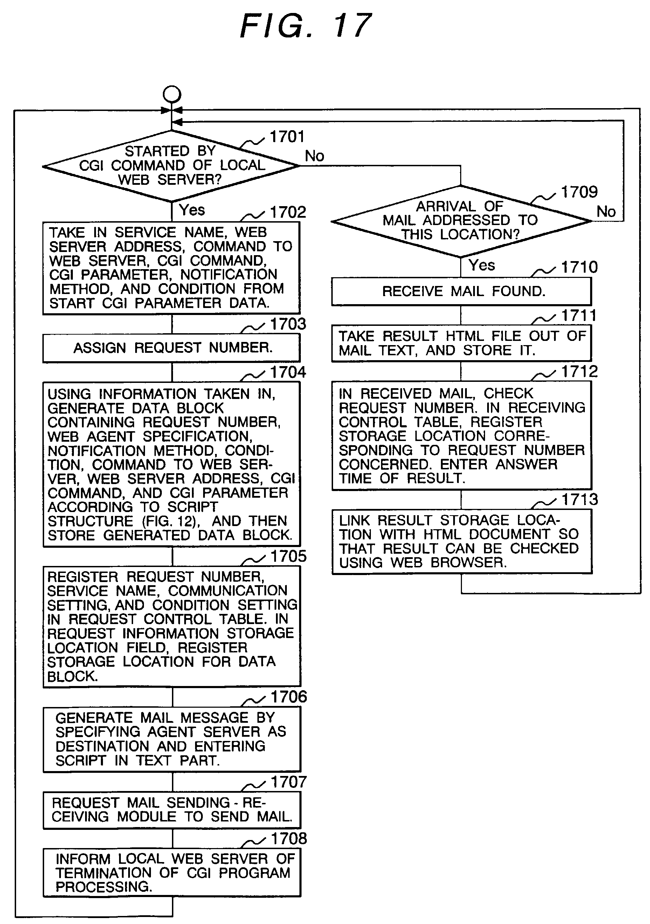

With reference to FIG. 17, the following describes the processing operation flow of the message converting module 1005, which operates to generate the above- noted script according to the request control table stated above. The processing operation flow shown in FIG. 17 may be implemented as a program running on an ordinary computer.

Referring to FIG. 17, in the message converting module 1005, process 1701 is provided to monitor whether there is a request for startup by the CGI command of the local Web server. Further, it is also monitored whether there is electronic mail addressed to the Web client terminal.

When the message converting module 1005 is started by the CGI command of the local Web server, process 1702 takes in the following information from the start CGI parameter data or the request control table 1008; service name, address of the desired Web server to be accessed actually, command to the web server, CGI command for accessing the application server from the Web server, CGI parameters, notification setting, and condition setting. At process 1703, a request number is assigned. Then, according to the script structure shown in FIG. 12, process 1704 generates a script that is a data block containing the request number, Web agent specifier, notification setting data, condition setting data, command to the Web server, address of the Web server, CGI command, and CGI parameters. The script (data block) thus generated is stored. At process 1705, the request number, service name, communication setting data, and condition setting data are entered into the request control table. The storage location of the data block stored at process 1704 is entered in the field "request information storage location" of the request control table. Then, process 1706 generates electronic mail addressed to the agent server by entering the script into the text part thereof. At process 1707, the mail sending- receiving module 2001 is requested to send the electronic mail. Then, at process 1708, the end of CGI program processing is reported to the local Web server 1002. Thereafter, control is returned to process 1701. At process 1701, it is monitored again whether there is a request for startup by the CGI command. Further, at process 1709, it is also monitored whether there is electronic mail addressed to the Web client terminal.

On the other hand, when process 1709 finds that there is electronic mail addressed to the Web client terminal, process 1710 is selected. At process 1701, the electronic mail is received. Then, at process 1711, a result HTML file is taken out of the text part of the electronic mail, and the result HTML file thus taken out is stored. According to the received electronic mail, process 1712 checks a request number. The storage location corresponding to the request number is entered into the result storage location field of the receiving control table. Further, in the receiving control table, the time of reception processing is entered into the field "time answered" corresponding to the request number. At process 1713, the result storage location is linked with the HTML document so that the result data can be checked using the Web browser. Thereafter, control is returned to process 1701. At process 1701, it is monitored again whether there is a request for startup by the CGI command. Further, at process 1709, it is also monitored whether there is electronic mail addressed to the Web client terminal.

Then, the following describes details of operations of the agent access module 205, Web agent 1007, Web server 902, and result transfer module 208 which are provided for the agent server shown in FIG. 10.

The agent access module 205 operates using the receiving control table 212. The operation processing flow of the agent access 205 is shown in FIG. 14, and the structure of the receiving control table 212 is shown in FIG. 13. In asynchronous Web access communication, the same operations as those for proxy access to the application server according to electronic mail containing necessary script are carried out also. The flows of these operations may be implemented as ordinary computer programs.

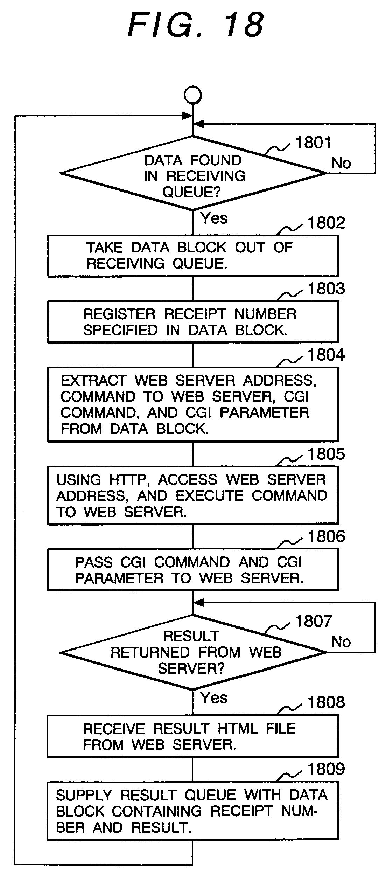

Referring to FIG. 18, there is shown an operation processing flow of the Web agent. The operation processing flow shown in FIG. 18 may also be implemented as an ordinary computer program.

The Web agent 1007 is provided with the receiving queue 213 and the result queue 214. Through the receiving queue 213, a request for proxy access is fed from the agent access module 205 to the Web agent 1007. Then, the Web agent 1007 makes proxy access to the actual Web server 902.

Result data returned from the Web server 902 is processed by the Web agent 1007, and the result data thus processed is supplied to the result queue 214. Receiving the result data through the result queue 214, the agent access module 205 passes it to the result transfer module 208.

In the Web agent 1007, process 1801 monitors whether any data is supplied to the receiving queue 213. If any data is found in the receiving queue 213, control goes to process 1802. At process 1808, a data block is taken out of the receiving queue 213. At process 1803, a receipt number indicated in the data block is registered. At process 1804, an address of the Web server to be accessed, a command to the Web server, a CGI command and CGI parameters are extracted from the data block. Using the HTTP, process 1805 makes access to the address of the Web server, and carries out the command to the Web server. At process 1806, the CGI command to be executed is passed to the Web server together with the CGI parameters. Then, at process 1808, the Web agent 1007 waits for result data from the Web server. When the result data is returned from the Web server, process 1808 receives it. At process 1809, a data block containing the receipt number of result data is supplied to the result queue 214. Then, control is returned to process 1801 for monitoring whether any data is supplied to the receiving queue 213.

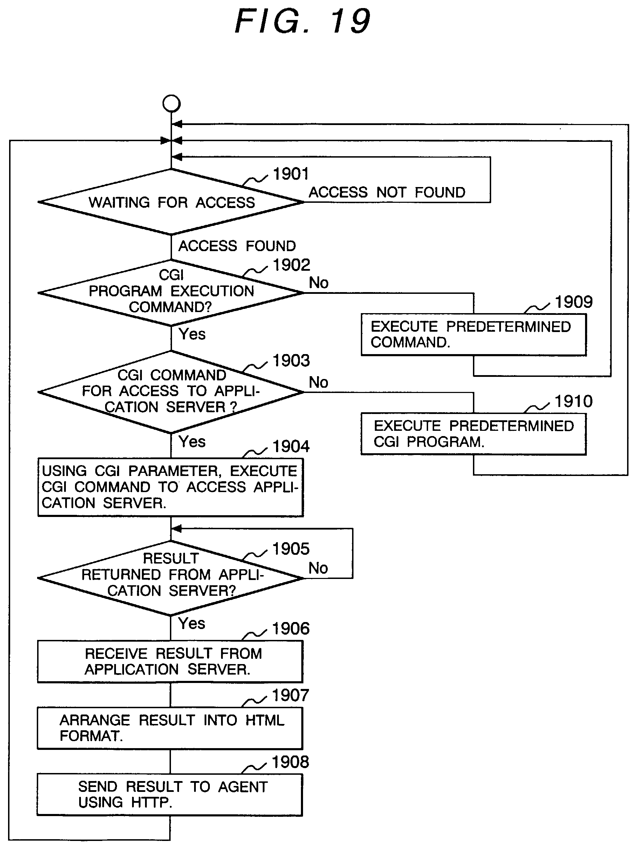

Referring to FIG. 19, there is shown an operation processing flow of the Web server. The operation processing flow shown in FIG. 19 may be implemented as an ordinary computer program.

The Web server, which is a general server, in the present preferred embodiment is described below with particular emphasis on relationship with implementation of the invention.

In the Web server, process 1901 monitors whether there is any access to it. If any access is found, control goes to process 1902. At process 1902, the contents of an execution command are checked. If the execution command is not for CGI program execution, process 1909 is selected to carry out a predetermined command operation. If the execution command is for CGI program execution but not for access to the application server, process 1910 is selected to carry out a predetermined CGI program operation. Thereafter, in either of the above cases, control is returned to process 1901 in which it is monitored whether there is any access to the Web server. If it is found through processes 1902 and 1903 that the execution command is a CGI command for accessing the application server, control goes to process 1904. At process 1904, according to the CGI command and the CGI parameters supplied from the Web agent, access is made to the application server. Thereafter, process 1905 monitors whether result data is returned from the application server. When the result data is returned from the application server, process 1906 receives it. Then, at process 1907, the result data received from the application server is arranged into HTML format. Using HTTP, process 1908 sends the result data to the Web agent. Thereafter, control is returned to process 1901, at which it is monitored again whether there is any access to the Web server.

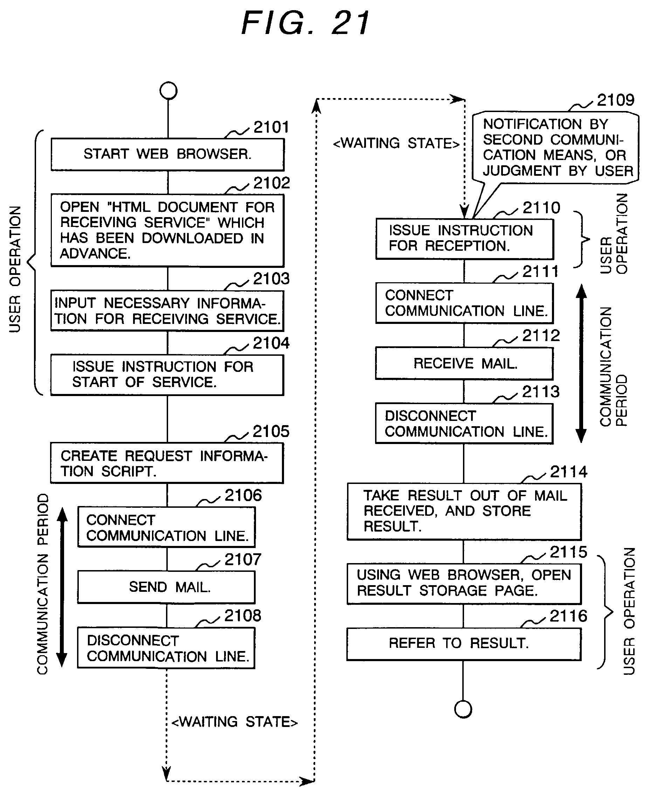

Referring then to FIG. 21, there is shown an operational sequence flowchart at the client terminal in asynchronous Web access communication. In this flowchart, the steps of user operation and the steps of processing in the client terminal are shown. The steps of processing in the client terminal may be implemented as ordinary computer programs.

At step 2101 for asynchronous Web access communication, the user of the client terminal starts up the Web browser in a state that a communication line is not connected. Then, at step 2102, the user opens the "HTML document for receiving service which has been downloaded in advance. At step 2103, the user inputs necessary information for receiving service. More specifically, as the necessary information for receiving service, the user specifies such items as a search keyword and a notification condition in an access screen page for using Web service. Then, at step 2104, the user issues an instruction for the start of service. For instance, in operation for obtaining search service, the user presses a "Search Button" for indicating the completion of search condition input and the start of search. In operation for obtaining another kind of service, the user presses the "Submit Button" or "Go Button" after inputting necessary information. Steps 2101 to 2104 mentioned above are performed by the user.

After step 2104, the message converting module in the client terminal carries out step 2105. At step 2105, a script for processing is generated. Then, at step 2106, the communication line is connected. At step 2107, request electronic mail containing the generated script is sent to the agent server. After completion of sending the request electronic mail, the communication line is disconnected at step 2108. Thereafter, a waiting state is provided.

In the waiting state, the user may receive a notice of the completion of service processing by any independent communication means other than electronic mailing, such as pager communication or cellular telephone short- message service communication. Alternatively, after a lapse of a certain period of time following transmission of the request electronic mail, the user may form a determination that service processing must have been completed. Then, at step 2110, the user issues an instruction for receiving result data. After step 2100, the client terminal connects the communication line at step 2111. At step 2112, the client terminal receives electronic mail addressed thereto. Immediately after the electronic mail is received, the communication line is disconnected at step 2113. If the electronic mail received contains result data corresponding the request for processing concerned, the result data is taken out of the text part of the received electronic mail and stored into a predetermined location at step 2114.

Then, at step 2115, when knowing the completion of storing the result data by means of an on- screen message or the like, the user opens the result storage page through the Web browser. Thus, at step 2116, the user can check the result data. Steps 2115 and 2116 mentioned above are performed by the user.

As described above, the communication line is used actually for a period of steps 2106 to 2108 taken for sending request information to the agent server and for a period of steps 2111 to 2113 for receiving result data from the agent server. Unlike common practice of Web server access in which the Web server is accessed directly and the communication line must be held connected even for a waiting time until result data is returned, the cost of communication associated with the waiting time can be eliminated in the above- mentioned sequence flow. This makes it possible to reduce the total cost of communication. Further, during the waiting period, the client terminal is allowed to perform another task, i.e., the user can make efficient use of the waiting time for any other purpose.

In the present preferred embodiment for asynchronous Web access communication mentioned above, request information input by the user through the Web browser and the local Web server in the client terminal is fed to the message converting module through execution of the CGI command in the local Web server. Then, the request information is entered into the request control table and also arranged in a script format for electronic mail. The electronic mail containing request information is then sent to the agent server.

When the agent server receives the request electronic mail addressed hereto, the agent access module checks request information and enters necessary information into the receiving control table. The agent access module also supplies data necessary for proxy access to the receiving queue of the specified agent, i.e., the Web agent. Then, according to the data taken out of the receiving queue, the Web agent accesses the specified Web server to carry out the CGI program therein. Through execution of the CGI program, the Web server makes access to the application server connected therewith. Thereafter, upon receipt of result data of service processing from the application server, the Web server returns it to the Web agent. At the Web agent, the result data is supplied to the result queue. Then, the agent access takes the result data out of the result queue, passes it to the result transfer module, and updates the receiving control table. Receiving the result data from the agent access, the result transfer module puts it in electronic mail, which is then sent to the client terminal concerned through the electronic mail sending module. If notification by any communication means other than electronic mailing is specified, the result transfer module also notifies the user of the completion of service processing.

At the client terminal, the user is informed of the completion of processing by any other means of electronic mailing, or the user checks for arrival of electronic mail addressed to the client terminal after a lapse of a certain period of time following transmission of the request electronic mail. Thus, when the electronic mail addressed to the client terminal is received, the message converting module takes the result data corresponding to the request for proxy access out of the received electronic mail. Further, the message converting module stores the result data into a predetermined location, enters relevant information into the request control table, and links the result storage location with the HTML document. Thus, the user can check the result data through the use of the Web browser.

The agent A 206 shown in FIGS. 2 and 5 may be replaced with the Web agent 1007 shown in FIG. 10 so that an URL can be specified in request electronic mail to be sent from the client terminal 101. In this case, the agent A 206 makes proxy access to the specified URL. Result data of an attained page or result page data attained through CGI program execution is returned as a document attached to electronic mail as described in the foregoing with reference to FIGS. 2 and 5, or the result data is stored into a separate server specified in request electronic mail.

As described in the preferred embodiments of the present invention, where proxy access to the application server from the mobile communication environment is carried out by the agent on behalf of the client terminal, the communication line is connected only when the client terminal makes a request for proxy access and when it receives result data of service processing. It is therefore possible to reduce a communication time for saving the amount of communication charge. For easy implementation, the mail box for each client and the mail box for each agent are provided in the electronic mail server so that the user can send request information and receive result data by electronic mail. Any kind of client terminal equipped with an electronic mailing function can utilize asynchronous proxy access communication.

Further, the agent server may be provided with different agents for different kinds of services so that each agent can be selected according to request information contained in electronic mail sent from the user. In this arrangement, plural kinds of services can be offered through a single agent server. For example, where there are provided an agent for accessing a corporate information system, an agent for accessing a database server, and an agent for Web access in one agent server, the user has only to send request electronic mail to the agent server regardless of the destination of access. Necessary processing for each access can thus be carried out easily.

Still further, since the user is informed of the completion of processing through proxy access by any communication means other than electronic mailing, the user can attain result data promptly. In addition, it is not required for the user to attempt useless access for checking for arrival of result electronic mail.

Moreover, since a plurality of access requests can be issued at the same time, the user can make efficient use of time. To avoid confusion with plural access requests, result data is identified with each request number corresponding thereto.

Furthermore, in addition to returning result data by electronic mail, it is possible to store the result data in a separate storage location specified by the user, e.g., a particular Web server, or in a storage location specified by the agent server, which is reported to the user later. Therefore, the result data can be shared with other persons. In an instance where the amount of result data is substantially large, the result data can be stored in a separate storage location, and any part of the result data stored therein can be checked later.

Still further, where an instruction to the agent for obtaining service can be represented in a format, it is preferable to prepare a template for information input. Thus, the user can specify an instruction easily.

Still further, in asynchronous Web access communication, it is just required to connect a communication line only when request mail is sent and when result mail is received. Therefore, in a search processing operation requiring a considerable amount of time or in a service processing operation in a corporate information system through Web access, the communication time and charge can be saved substantially. When utilizing a variety of services through Web access, the user has only to run a Web browser in a user- friendly operating environment. In addition, execution of electronic mailing is transparent to the user.

Each processing operational flow in the present preferred embodiments may be implemented as a program module running on a computer having an ordinary configuration. For example, the processing operation flow shown in FIG. 14 is implemented as the agent access module 205 which is a program module running on the agent server 105. The other operation processing flows are implemented in a similar fashion.

Further, each functional component described in the present preferred embodiments may be implemented as a program module running on an ordinary computer employed as a client terminal, Web client terminal, electronic mail server or agent server.

Still further, each of these program modules may be supplied in a form of contents stored in a magnetic storage medium such as a floppy disk or hard disk, in a nonvolatile or battery- backed semiconductor memory, or in an optical disc storage medium such as a CD- ROM. In addition, each of these program modules may be supplied through downloading from the above- mentioned server or another server connected with a wire or wireless communication network.

As set forth hereinabove and according to the present invention, the following advantageous effects are provided:

Since the user performs communication only when issuing a request for service processing to a server and when receiving result data of service processing, the present invention can eliminate the cost of communication for a useless communication period corresponding to a processing time required for the server to produce result data, thereby contributing to reduction in the total cost of communication.

Further, in Web access communication, the present invention can eliminate the cost of communication for a useless waiting period from a point in time the user specifies service processing until result data of service processing arrives at the user.

While the present invention has been described in detail and pictorially in the accompanying drawings, it is not limited to such details since many changes and modifications recognizable to those of ordinary skill in the art may be made to the invention without departing from the spirit and the scope thereof.

## Claims

1. A client- server system communication method using an agent for accessing an application server according to a request instruction issued by a client terminal, comprising the steps of:
allowing said client terminal to set up a communication path, to send a request instruction for acquisition of desired data to an agent server by communication means, and then to disconnect the communication path after sending said request instruction to said agent server;
allowing said agent server to supply said request instruction to said agent;
allowing said agent to make proxy access to said application server on behalf of said client terminal according to said request instruction sent to said agent server, and then to report result data attained through proxy access to said agent server;
allowing said agent server to return said result data attained through proxy access to said client terminal; and
allowing said client terminal to set up a communication path again for receiving said result data attained through proxy access.

2. A client- server system communication method according to claim 1,
wherein, using communication means for providing a second communication path, which is independent of said communication means, said agent server notifies said client terminal that said result data is ready for said client terminal to receive when said agent server has completed processing thereof.

3. A client- server system communication method according to claim 1,
wherein, in said request instruction to said agent, said client terminal indicates information for specifying a result storage server to be used for storing said result data attained through said agent, and
wherein said agent server stores said result data into said result storage server specified by said information.

4. A client- server system communication method according to claim 3,
wherein said agent server stores result data attained through said agent into a result storage server specified by said agent server, and
wherein said agent server notifies said client terminal of identification of said result storage server.

5. A client- server system communication method according to claim 1,
wherein a template for describing a request instruction to said agent is provided in said client terminal, and
wherein a request instruction to said agent can be prepared by editing said template.

6. A client- server system communication method according to claim 1,
wherein electronic mail is used as said communication means, and said request instruction is contained in request electronic mail to indicate any of a request control number, a specifier of an agent requested to make proxy access, at least one instruction command to said agent, at least one parameter for said command, and information concerning transfer of result data attained through proxy access.

7. A client- server system communication method according to claim 6,
wherein, according to said request instruction indicated in said request electronic mail, said agent server selects an agent, supplies said agent with at least one command or at least one parameter therefor, and then enters result data attained through said agent into a text part of result electronic mail to be returned to a source of said request electronic mail.

8. A client- server system communication method according to claim 7,
wherein, according to said request instruction indicated in said request electronic mail, said agent server controls how to handle result data attained through proxy access using said agent, how to return said result data to said client terminal, and how to notify said client terminal that said result data is ready for said client terminal to receive.

9. A mobile communication method in a system including a client terminal, a Web server, an application server having linkage with said Web server, and communication paths for mutual connections thereamong, comprising the steps of:
allowing a user to create a request instruction for proxy access according to processing execution information described in a Web page presented using a Web browser and a local Web server in said client terminal;
allowing said client terminal to set up a communication path, to send said request instruction to an agent server by communication means, and then to disconnect the communication path after sending said request instruction to said agent server;
allowing said agent server to receive said request instruction and to supply said request instruction to an agent specified by said request instruction;
allowing said agent to make proxy access to said Web server on behalf of said client terminal according to said request instruction; and
allowing said client terminal to set up a communication path again for receiving result data attained through proxy access and to display said result data using said Web browser.

10. A mobile communication method according to claim 9,
wherein a program startup command and a parameter necessary for startup described in a pre- downloaded access HTML document are transferred from said local Web server to said agent server as request instruction information for proxy access.

11. A mobile communication method in a system including a client terminal, an application server, a Web server having linkage with said application server, and an agent server having at least one Web access agent for proxy access to said Web server, comprising the steps of:
allowing said client terminal, equipped with a Web browser, a local Web server, a message converting function and a message sending- receiving function, to accept request information for access to said application server having linkage with said Web server, in a state of non- connection of a communication path, using a pre- stored HTML document and said local Web server;
allowing said client terminal to generate a request instruction for letting said Web access agent make proxy access to said Web server according to said request information for said proxy access;
allowing said client terminal to set up a communication path to send said request instruction to said agent through said agent server; and
allowing said client terminal to convert result data of proxy access received from said agent into a format for viewing with said Web browser of said client terminal.

12. A mobile communication method according to claim 11,
wherein said request instruction for proxy access to be sent to said agent server contains any of a request control number, a specifier of an agent requested to make proxy access, an HTML command for proxy access, an address of a Web server to be accessed, a command and parameter string for execution on said Web server to be accessed, and information concerning transfer of result data attained through proxy access.

13. A mobile communication method according to claim 11,
wherein said agent server selects a Web access agent according to said request instruction received from said client terminal and sends the contents of said request instruction to said Web access agent, and
wherein, when result data attained through proxy access is fed from said Web access agent, said agent server enters said result data into a message, and then said agent server returns said message to said client terminal.

14. A mobile communication method according to claim 13,
wherein, according to the contents of said request instruction for proxy access, said agent server controls how to handle result data attained through proxy access from said Web access agent, how to return said result data to said client terminal, and how to notify said client terminal that said result data is ready for said client terminal to receive.

15. A mobile communication method according to claim 11,
wherein said client terminal disconnects the communication path after said request instruction for proxy access is sent to said agent server,
wherein said client terminal sets up a communication path again after a lapse of a certain period of time or when said client terminal is notified of completion of proxy access using any other communication means, and
wherein, after result data attained through proxy access is received from said agent server, said client terminal disconnects the communication path and displays said result data using said Web browser.
